# EUROPEAN PATENT SPECIFICATION

(11) **EP 1 160 121 B1**
(45) Date of publication and mention of the grant of the patent: **27.10.2004**
(21) Application number: 01113307.1
(22) Date of filing: 31.05.2001
(51) Int. Cl.: B60N 2/20, B60N 2/015

(54) **Device for securing a seat back to a body of a motor vehicle**
Vorrichtung zum Befestigen einer Sitzrückenlehne an einer Kraftfahrzeugkarosserie
Dispositif pour fixer un dossier de siège à la carrosserie d'un véhicule automobile

(30) Priority: 02.06.2000 IT TO000521
(43) Date of publication of application: 05.12.2001
(73) Proprietor: Intier Automotive Eybl (Germany) GmbH, 92442 Wackersdorf (DE)
(72) Inventor: Crotti, Giacomo, 56100 Pisa (IT)
(74) Representative: Jorio, Paolo

(56) References cited:
- WO-A-99/02365
- DE-A- 1 801 154
- FR-A- 2 306 102
- GB-A- 2 231 617
- US-A- 5 722 727

## Description

The present invention relates to a device for securing a seat back, particularly a rear seat back, to a body of a motor vehicle.

There are known securing devices, which generally comprise a pin fixed to the body of the motor vehicle and an attachment mechanism carried on the seat back and capable of being coupled to the pin.

The attachment mechanism essentially comprises a supporting body fixed to the seat back, a fork hinged to the supporting body about a first fixed pivot and having an engagement seat for a generally cylindrical portion of the pin, and a retainer hinged to the supporting body about a second fixed pivot, loaded by a spring against a peripheral edge of the fork and capable of being snapped on to the fork to lock it releasably in an attachment position in which the cylindrical portion of the pin is locked in the seat of the fork.

In particular, the fork is loaded by a corresponding spring towards an open position, in which it permits the engagement and disengagement of the cylindrical portion of the pin with its seat, and is rotated about the first pivot as a result of the impact with the cylindrical portion of the pin.

During its movements, the fork is subjected to a degree of «braking» as a result of the friction of its peripheral edge against the retainer, and it is therefore possible that, following the release of the retainer, the fork may be in a position different from the open position; in other words, it may be displaced from the ideal position for receiving the cylindrical portion of the pin. Consequently, during the securing of the seat back to the body, the attachment mechanism, and in particular the fork, could interact with unsuitable parts of the pin, thus causing, in the best case, the blocking of the attachment mechanism, and, in the worst case, the forcing, and possible breaking, of the mechanism.

The braking effect exerted by the retainer on the fork is particularly marked in the case of seat backs divided into two independent portions releasably interconnected by a fixing pin, which in turn is fixed to the retainer by a flexible cable transmision, of the Bowden type for example. In such a case, the fixing pin is normally loaded by a corresponding spring towards the position of securing the two portions of seat back and, therefore, during the engagement of the fork with the cylindrical portion of the pin, the load which pushes the retainer into contact with the fork is increased by the elastic reaction of the aforesaid spring.

WO 99/02365 discloses a removable vehicle seat for use with a motor vehicle having an interior floor structure with at least a portion thereof covered by a yielding deformable material. A latch and release assembly engages with front and rear anchor members of the interior floor structure and releasably locks in one of a range of releasably locked positions. The latch and release assembly includes left and right rear movable fork members forced to lock, in a releasably manner, around respective rear anchor members by the action of respective retainers.

The object of the present invention is to provide an attachment device, for securing a seat back to a body of a motor vehicle, which makes it possible to overcome in a simple and economic way the disadvantage associated with the known securing devices specified above.

The aforesaid object is achieved by the present invention, in that it relates to a device for securing a seat back to a body of a motor vehicle, comprising at least one pin carried on either the seat back or the body, and an attachment mechanism carried on another of either the seat back or the body and capable of interacting with the said pin, the said attachment mechanism comprising:
- a supporting body;
- a fork hinged to the said supporting body, forming an engagement seat for the said pin and loaded by first elastic means towards an open position, in which the engagement of the said pin with the said seat and its disengagement therefrom are permitted; and
- a retainer hinged to the said supporting body, loaded by second elastic means towards the said fork and capable of being snapped on to the fork to lock it releasably in an attachment position, in which the said pin is coupled to the said seat;
characterized in that the said attachment mechanism comprises releasable locking means, which interact with the said retainer to keep it in a position of separation from the said fork, and which can be selectively disabled by the movement of the fork into the said attachment position.

For a clearer understanding of the present invention, a preferred embodiment is described below, purely by way of example, without restrictive intent and with reference to the attached drawings, in which:
- Figure 1 shows, in a side view, a device for securing a seat back to a body of a motor vehicle; and
- Figures 2 and 3 show, in a side view and with parts removed for clarity, the securing device of Figure 1, in two different operating conditions.

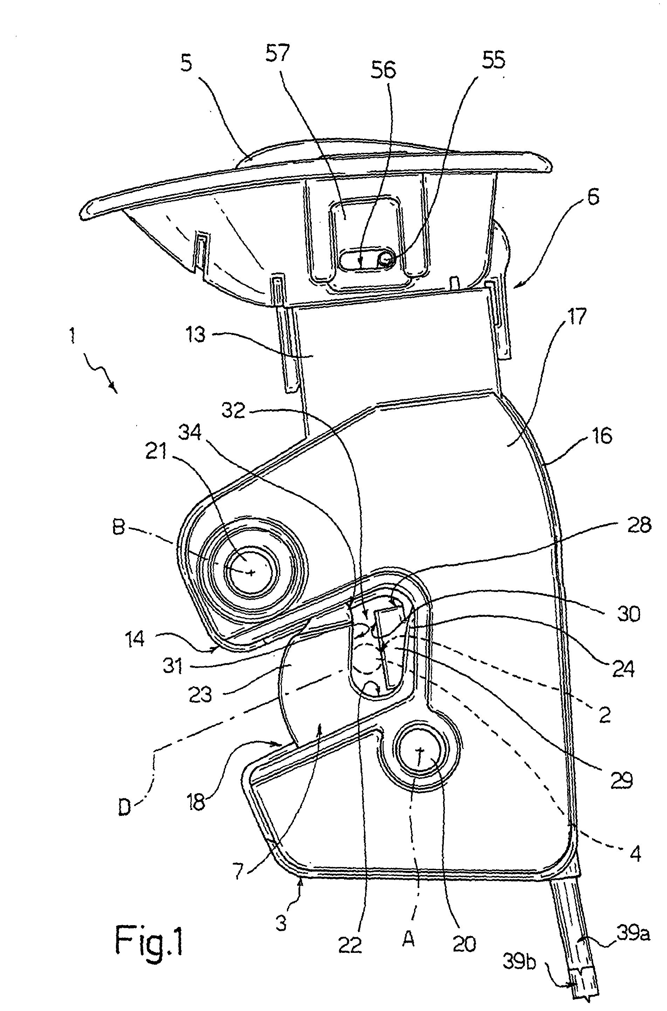

With reference to Figures 1 to 3, the number 1 indicates in a general way a device for securing a back of a rear seat (known and not illustrated) to a body of a motor vehicle (not illustrated). The seat back is conveniently divided into two independent portions secured together releasably in the raised operating position by means of a fixing pin.

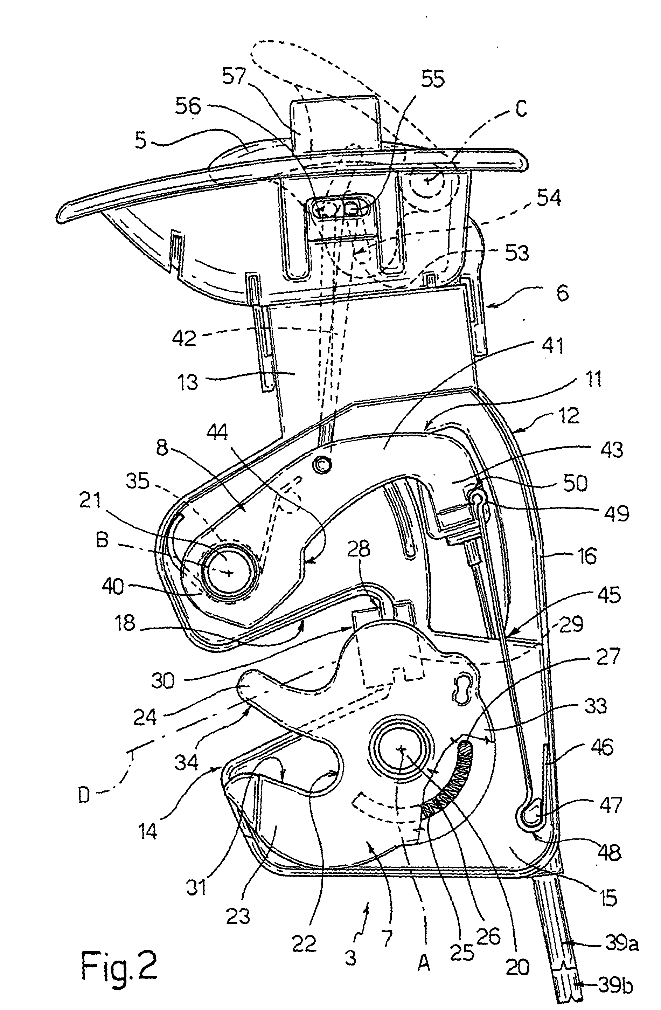

The device 1 comprises a pin 2 fixed to the body of the motor vehicle and shown schematically in broken lines in Figure 2, an attachment mechanism 3 carried on the seat back and capable of being coupled to a cylindrical portion 4 of the pin 2 in a direction D of relative coupling to secur the seat back releasably to the body, and an operating lever 5, of a known type, which can be operated manually to release the attachment mechanism 3 from the pin 2.

The attachment mechanism 3 essentially comprises a supporting frame 6 fixed to the seat back, and a fork 7 and a retainer 8 hinged to the frame 6.

In particular, the frame 6 is formed by a box-shaped body 10 made from sheet material, creating a compartment 11 for housing the fork 7 and the retainer 8, and having a thickness which is small with respect to the other dimensions, and by a shell body 12, preferably made from plastic material, joined to an end extension 13 of the box-shaped body 10 and housing the operating lever 5.

In the position in which it is fitted to the seat back, the shell body 12 is located vertically above the box-shaped body 10.

In greater detail, the box-shaped body 10 comprises a base plate 15 made from plastic material and having an approximately trapezoidal profile, from whose outer perimeter there extends a lateral projecting edge 16 delimiting, together with the plate 15, the compartment 11. The box-shaped body 10 additionally comprises a metal cover plate 17 of the compartment 11, located opposite and parallel to the plate 15. The extension 13 is of essentially parallelepipedal shape and extends integrally with, and projects from, an upper end portion of the edge 16.

The box-shaped body 10 includes a lateral C-shaped seat 18 formed in the plate 15, communicating with the compartment 11 and capable of being engaged, with a degree of play, by the portion 4 of the pin 2 during the coupling of the latter to the attachment mechanism 3. Conveniently, the plate 17 has a lateral recess 19 whose shape matches that of the seat 18. The edge 16 is also interrupted in the area of the seat 18 to permit communication between the seat 18 and the compartment 11.

To permit the engagement and disengagement of the portion 4 of the pin 2, the seat 18 has an entry aperture 14 facing in the direction D.

The box-shaped body 10 is also provided with a damping element or buffer 29, made from relatively yielding material, typically rubber, fixed on an inner edge 28 of the seat 18 opposite the entry aperture 14, extending transversely with respect to the direction D and forming a stop for the portion 4 of the pin 2 during the coupling of the pin 2 to the attachment mechanism 3.

The fork 7 and the retainer 8 are hinged, respectively, about pivots 20, 21 fixed integrally with the plates 15, 17, extending through the compartment 11 between the aforesaid plates 15, 17 and having respective axes A, B parallel to each other and orthogonal to the plates 15, 17 and to the direction D.

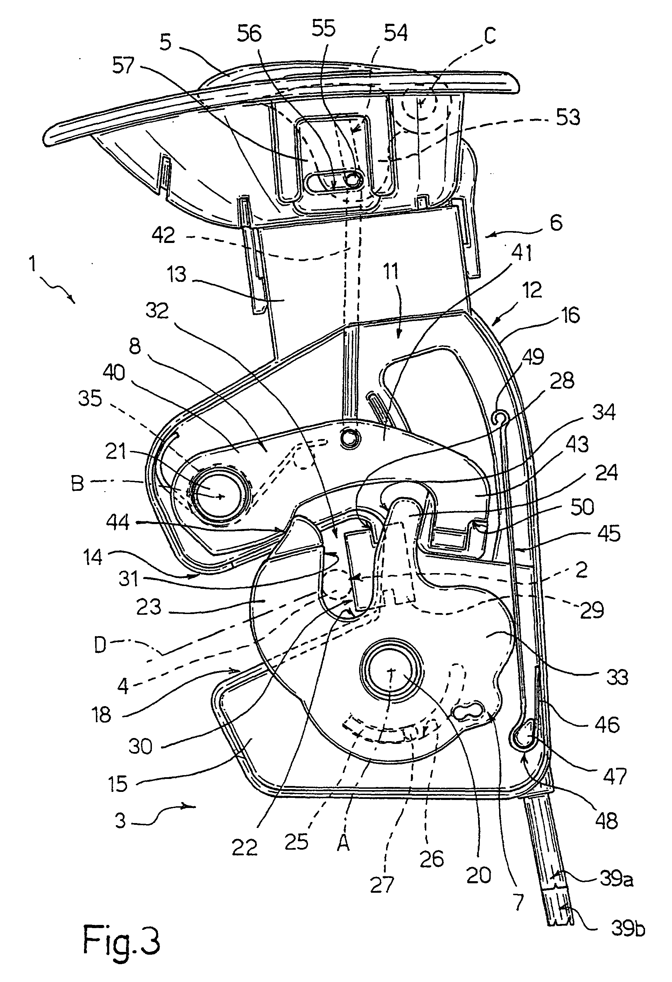

With particular reference to Figures 2 and 3, the fork 7 consists of a shaped metal plate, is hinged in an intermediate portion to the pivot 20 and has a peripheral C-shaped seat 22 capable of receiving the portion 4 of the pin 2 and delimited laterally by a pair of teeth 23, 24.

The fork 7 is rotatable about the axis A of the pivot 20 between an open position and a position of attachment to the portion 4 of the pin 2.

In the open position (Figure 2), the seat 22 has an entry aperture 34 essentially facing in the direction D in a similar way to the aperture 14 of the seat 18 to pemit the engagement and disengagement of the portion 4 of the pin 2; in the attachment position (Figures 1 and 3), the portion 4 of the pin 2 is locked within the seats 18 and 22 in a fixing compartment 32 delimited, on one side, by the damping element 29 and, on the opposite side, by the tooth 23, which intercepts the seat 18.

Advantageously, the fixing compartment 32 has a cross section which decreases towards the entry aperture 34 of the seat 22 of the fork 7, and which forms an interference fit with the portion 4 of the pin 2. Thus the portion 4 of the pin 2 can be locked within the fixing compartment 32 in any position, and in particular at any distance from the bottom of the seat 22.

Preferably, the fixing compartment 32 is delimited by a pair of essentially flat stop surfaces 30, 31, formed respectively by the damping element 29 and by the tooth 23 of the fork 7, and converging towards each other towards the entry aperture 34 of the seat 22.

The fork 7 is loaded in a known way towards the opening position by a compression spring 25, of the cylindrical coil type for example (indicated by a broken line in Figures 2 and 3), which is housed in a curved C-shaped channel 26 formed in the plate 15 and is compressed by a pin 27 projecting from the fork 7 and coupled slidably within the channel 26. More precisely, the open position is determined by the contact between a portion of the peripheral edge of the fork 7 adjacent to the tooth 23 and a portion of the edge 16 of the box-shaped body 10 adjacent to the seat 18.

In detail, in the open position, the tooth 24 of the fork 7 projects partially through the seat 18 and the recess 19 of the box-shaped body 10 in such a way that it intercepts the portion 4 of the pin 2 during the securing of the seat back to the body, and receives, in the impact with the portion 4, a thrust action tending to rotate the fork 7 about the axis A against the action of the spring 25.

Conveniently, the fork 7 is covered externally with a shell of plastic material, from which the free end of the tooth 23 projects.

Finally, the peripheral edge of the fork 7 has, in a position adjacent to the tooth 24, a protuberance 33 having a convex curved profile, whose function will be explained subsequently.

The retainer 8 consists of an elongate plate coplanar with the fork 7 and made from metal. The retainer 8 is positioned at one side of the fork 7 and is loaded in a known way towards the latter by a spring 35 wound around the pivot 21 and having a first end portion bent around a stud on the retainer 8 and a second end portion positioned in contact with the edge 16 of the box-shaped body 10. More precisely, in the position in which the securing device 1 is fitted on the back of the rear seat of the motor vehicle, the retainer 8 is located above the fork 7 in a position between the fork 7 and the operating lever 5.

The retainer 8 comprises a first end portion 40 adjacent to the seat 18 and hinged on the pivot 21, an intermediate portion 41 connected to the operating lever 5 by means of a link 42, and a second end portion 43 bent in an L-shape towards the fork 7 and coupled in a known way by means of corresponding flexible cable transmissions 39a, 39b, for example of the type generally known as Bowden transmissions, to, respectively, a winding device (known and not illustrated) of the safety belts associated with the rear seat and to the fixing pin for the releasable connection of the two portions into which the back of the seat is divided.

The retainer 8 can releasably lock the fork 7 in the attachment position, by forming with its shoulder 44, positioned in the proximity of the end portion 40, a stop for the free end of the tooth 23 (Figure 3).

According to an important aspect of the present invention, the attachment mechanism 3 comprises a lever locking element 45, which can be coupled releasably to the end portion 43 of the retainer 8 to keep the retainer 8 in a position of separation from the fork 7 against the action of the spring 35 (Figure 2), and which can be disengaged from the retainer 8 by the displacement of the fork 7 in the attachment position (Figure 3).

In particular, the locking element 45 consists of a single-leaf spring, extending essentially in a vertical direction which is transverse with respect to the direction D, and positioned at the side of the fork 7 where the end portion 43 of the retainer 8 is located. The locking element 45 has a end portion 46 bent in a U-shape around a stud 47 projecting from the plate 15 of the box-shaped body 10, and trapped between the stud 47 and the edge 16 in such a way as to form an elastic hinge 48.

The locking element 45 is pre-loaded towards the fork 7 and the retainer 8 in such a way that, in the absence of external actions, its free C-shaped end portion 49, opposite the end portion 46, tends to become engaged in a peripheral recess 50 of the retainer 8, thus defining a first operating position of the locking element 45. In particular, the recess 50 is essentially L-shaped, is formed in the end portion 43 of the retainer 8, and faces the edge 16.

During the rotation of the fork 7 about the axis A towards the attachment position, the protuberance 33 is able to interact with an intermediate portion 51 of the locking element 45, thus causing the locking element 45 to rotate about the hinge 48 towards a second operating position, in which the end portion 49 is rotated towards the edge 16 and is disengaged from the recess 50 of the retainer 8.

The operating lever 5 is hinged to corresponding lateral walls of the shell body 12 about an axis C parallel to the axes A and B; the operating lever 5 has an integral lateral tongue 53 provided with an elongate slot 54 extending essentially in a vertical direction and engaged slidably by an end stud 55 of the link 42.

The stud 55 of the link 42 is also fitted slidably within a further horizontal rectilinear slot 56 formed in a plate 57 fitted so that it can slide vertically through a slot of the shell body 12. The operating lever 5 is loaded by a corresponding spring (of a known type and not illustrated) into a rest position, in which it is housed completely within the shell body 12, and can be moved manually about the axis C towards an open position in which it projects outside the shell body 12 and, by means of the link 42, causes the retainer 8 to be disengaged from the fork 7. The plate 57 can be moved between a lowered position, corresponding to the attachment position of the fork 7, in which it is completely housed within the shell body 12, and a raised position, corresponding to the open position of the fork 7, in which it projects partially from the shell body 12.

The plate 57 is moved from the lowered position to the raised position by the rotation of the operating lever 5 from the rest position to the opening position, while the opposite movement is generated by the rotation of the retainer 8 about the axis B following the impact of the pin 2 on the fork 7 which brings the latter to the attachment position.

The plate 57 provides a visual indication of the condition of securing the rear seat back to the body of the motor vehicle.

The operation of the securing device 1 is described from an initial configuration of disengagement of the rear seat back from the body of the motor vehicle. In this configuration (Figure 2), the fork 7 is in the open position, the portion 4 of the pin 2 is disengaged from the seats 18 and 22, the retainer 8 is retained in the position of separation from the fork 7 as a result of the engagement of the end portion 49 of the locking element 45 in the recess 50, and the plate 57 is held in the raised position by the retainer 8 and the link 42. Additionally, by means of the flexible cable transmission 39b, the retainer 8 keeps the fixing pin of the two portions of seat back disengaged from one of these portions.

By rotating the seat back to its raised position for use, an impact is caused in the direction D between the portion 4 of the pin 2 and the tooth 24 of the fork 7, which rotates in the clockwise direction from the open position of Figure 2 towards the attachment position of Figures 1 and 3.

During the rotation of the fork 7, the protuberance 33 interacts with the locking element 45, causing it to rotate about the hinge 48 towards the edge 16 and consequently causing the end portion 49 of the locking element 45 to be disengaged from the recess 50 of the retainer 8. Under the action of the spring 35, the retainer 8 therefore rotates about the axis B towards the fork 7, thus pulling the plate 57 into the lowered position by means of the link 42. At the same time, the tooth 23 of the fork 7 snaps into a position where it bears on the shoulder 44 and is locked by the latter in the attachment position. The portion 4 of the pin 2 therefore remains enclosed within the seats 18 and 22 between the surface 30 of the tooth 23 and the surface 31 of the damping element 29, thus forming a configuration in which the seat back is secured to the body.

To return to the initial configuration of disengagement, it is simply necessary to move the operating lever 5, rotating it in the clockwise direction according to Figures 2 and 3 towards the open position. Because of the essentially orthogonal arrangement of the directions of extension of the slots 54, 56, the plate 57 is moved towards its raised position together with the stud 55 of the link 42. At the same time, the retainer 8 is rotated in the anti-clockwise direction (with reference to the attached figures) about the axis B, thus releasing the fork 7.

In particular, the tooth 23 is disengaged from the shoulder 44 and, under the thrust action of the spring 25, the fork 7 rotates in the anti-clockwise direction towards the open position. During this movement, the protuberance 33 is separated from the locking element 45, which can therefore rotate towards the fork 7 until its end portion 49 engages in the recess 50 of the retainer 8, thus locking the retainer 8 in the position of separation from the fork 7.

When the open position of the fork 7 has been reached, the portion 4 of the pin 2 can be disengaged from the seat 22 of the fork 7.

An examination of the characteristics of the securing device 1 made according to the present invention clearly reveals the advantages which it provides.

In particular, owing to the arrangement of the locking element 45, which holds the retainer 8 in a position of separation from the fork 7 in the stages of securing the seat back to the body and releasing it therefrom, the fork 7 can move freely without friction between its open and attachement positions. The risk that the fork 7, following the release of the retainer 8, may be placed in a position other than the open position, with the possible blocking or breaking of the attachment mechanism 3 in the next stage of securing the seat back to the body, is therefore avoided.

Finally, it is clear that modifications and variations can be made to the securing device 1 without departure from the scope of protection of the present invention.

In particular, the attachment mechanism 3 could be fixed to the body of the motor vehicle and the pin 2 could be fixed to the seat back.

## Claims

1. Device (1) for securing a seat back to a body of a motor vehicle, comprising at least one pin (2) carried on either the seat back or the body, and an attachment mechanism (3) carried on another of either the seat back or the body and capable of interacting with the said pin (2), the said attachment mechanism (3) comprising:
- a supporting body (6);
- a fork (7) hinged to the said supporting body (6), forming an engagement seat (22) for the said pin (2) and loaded by first elastic means (25) towards an open position, in which the engagement of the said pin (2) with the said seat (22) and its disengagement therefrom are permitted; and
- a retainer (8) hinged to the said supporting body (6), loaded by second elastic means (35) towards the said fork (7) and capable of being snapped on to the fork (7) to lock it releasably in an attachment position, in which the said pin (2) is coupled to the said seat (22);
**characterized in that** the said attachment mechanism (3) comprises releasable locking means (45), which interact with the said retainer (8) to keep it in a position of separation from the said fork (7), and which can be selectively disabled by the movement of the fork (7) into the said attachment position.

2. Device according to Claim 1, **characterized in that** the said locking means comprise a lever element (45) movable between a first operating position, in which it is coupled releasably to the said retainer (8) and keeps it in the said position of separation from the said fork (7), and a second operating position, in which the lever element (45) is released from the said retainer (8).

3. Device according to Claim 2, **characterized in that** the said lever element (45) is located at one side of the said fork (7) and is loaded towards the said first operating position of coupling to the said retainer (8), and **in that** the said fork (7) has an interaction portion (33) capable of exerting a thrust on the said lever element (45) to uncouple it from the said retainer (8) during the movement of the fork (7) towards the said attachment position.

4. Device according to Claim 3, **characterized in that** the said interaction portion is formed by a protuberance (33) of the peripheral edge of the said fork (7).

5. Device according to any one of Claims 2 to 4, **characterized in that** the said lever element (45) has a first end portion (46) secured in the form of a hinge to the said supporting body (6) and a second free end portion (49) which can be coupled releasably to an end recess (50) of the said retainer (8).

6. Device according to Claim 5, **characterized in that** the said recess (50) is essentially L-shaped.

7. Device according to any one of Claims 2 to 6, **characterized in that** the said lever element (45) consists of a leaf spring.

8. Device according to Claim 7, **characterized in that** the said first end portion (46) of the said lever element (45) is essentially U-shaped, is wound around a stud (47) of the said supporting body (6) and is trapped between the stud (47) and a retaining portion (16) of the said supporting body (6).

## Patentansprüche

1. Vorrichtung (1) zum Befestigen einer Sitzrückenlehne an einen Kraftfahrzeugaufbau. mit zumindest einem Stift (2), der entweder an der Rückenlehne oder am Aufbau gehalten ist. und einen Befestigungsmechaniamus (3). der an dem anderen von entweder der Rückenlehne oder dem Aufbau gehalten und in der Lage ist. mit dem Stift (2) zusammen zu wirken, der Befestigungsmechanismus (3) umfasst:
- einen Stützkörper (6),
- eine an dem Stützkörper (6) angelenkte Gabel (7). die einen Eingriffssitz (22) für den Stift (2) bildet und die durch erste elastische Mittel (25) in Richtung einer Offenstellung belastet ist, in der der Eingriff des Stiftes (2) mit dem Sitz (22) und sein Ausrücken daraus gestattet sind. und
- einem an dem Stützkörper (6) angelenkten Rückhalter (8). der durch zweite elastische Mittel (35) zur Gabel (7) hin belastet ist und der in der Lage ist, auf die Gabel (7) zu schnappen, um sie lösbar in einer Befestigungsposition zu verriegeln, in welcher der Stift (2) mit dem Sitz (22) gekoppelt ist,
**dadurch gekennzeichnet, dass** der Befestigungsmechanismus (3) lösbare Verriegelungsmittel (45) umfasst, die mit dem Rückhalter (8) zusammen wirken, um ihn in einer Stellung getrennt von der Gabel (7) zu halten, und die wahlweise durch die Bewegung der Gabel (7) in die Befestigungsstellung unwirksam gemacht werden können.

2. Vorrichtung nach Anspruch 1, **dadurch gekennzeichnet, dass** die Verriegelungsmittel ein Hebelelement (45) umfassen, dass zwischen einer ersten Betriebsstellung, in der es mit dem Rückhalter (8) lösbar gekoppelt ist und ihn in der Stellung getrennt von der Gabel (7) hält, und einer zweiten Betriebsstellung bewegbar ist, in der das Hebelelement (45) von dem Rückhalter (8) gelöst ist.

3. Vorrichtung nach Anspruch 2. **dadurch gekennzeichnet, dass** das Hebelelement (45) auf einer Seite der Gabel (7) gelegen ist und in Richtung der ersten Betriebsstellung der Kopplung mit dem Rückhalter (8) belastet ist. und dass die Gabel (7) einen Wechselwirkungsabschrutt aufweist, der in der Lage ist, einen Druck auf das Hebelelement (45) auszuüben, um es von dem Rückhalter (8) zu entkoppeln während der Bewegung der Gabel (7) in Richtung der Befestigungsstellung.

4. Vorrichtung nach Anspruch 3. **dadurch gekennzeichnet. dass** der Wechselwtrkungsabschnitt durch eine Wölbung (33) des peripheren Randes der Gabel (7) gebildet ist.

5. Vorrichtung nach einem der Ansprüche 2 bis 4. **dadurch gekennzeichnet, dass** das Hebelelement (45) einen ersten Endabschnitt (46), der in Form eines Gelenks an dem Stützkörper (6) befestigt ist, und einen zweiten freien Endabschnitt (49) aufweist, der lösbar mit einer Endausnehmung (50) des Rückhalters (8) gekoppelt werden kann.

6. Vorrichtung nach Anspruch 5. **dadurch gekennzeichnet, dass** die Ausnehmung (50) im Wesentlichen L-förmig ist.

7. Vorrichtung nach einem der Ansprüche 2 bis 6, **dadurch gekennzeichnet. dass** das Hebelelement (45) aus einer Blattfeder besteht.

8. Vorrichtung nach Anspruch 7. **dadurch gekennzeichnet, dass** der erste Endabschnitt (46) des Hebelelements (45) im Wesentlichen U-förmig ist, um einen Zapfen (47) des Stützkörpers (6) gewickelt ist und zwischen dem Zapfen (47) und einem Rückbalteabschnitt (16) des Stützkörpers (6) gefangen ist.

## Revendications

1. Dispositif (1) pour fixer un dossier de siège à la carrosserie d'un véhicule automobile, comprenant au moins un pion (2) porté soit sur l'un du dossier de siège ou de la carrosserie, et un mécanisme de fixation (3) porté sur l'autre du dossier de siège, ou de la carrosserie et capable d'interagir avec ledit axe (2), ledit mécanisme de fixation (3) comprenant :
- un corps de support (6) ;
- une fourche (7) articulée sur ledit corps de support (6), formant une embase (22) pour l'engagement dudit axe (2) et chargée par des premiers moyens élastiques (25) vers une position ouverte, permettant l'engagement dudit axe (2) avec ladite embase (22) et son désengagement de celle-ci ; et
- une pièce de retenue (8) articulée sur ledit corps de support (6), chargée par des seconds moyens élastiques (35) vers ladite fourche (7) et capable d'être encliquetée sur la fourche (7) pour la verrouiller de manière détachable dans une position de fixation, ledit axe (2) étant accouplé à ladite embase (22) ;
**caractérisé en ce que**
ledit mécanisme de fixation (3) comprend des moyens de verrouillage détachables (45) qui interagissent avec ladite pièce de retenue (8) pour la maintenir dans une position de séparation de ladite fourche (7) et qui peuvent être relâchés de manière sélective par le mouvement de la fourche (7) dans ladite position de fixation.

2. Dispositif selon la revendication 1,
**caractérisé en ce que**
lesdits moyens de verrouillage comprennent un élément de levier (45) pouvant se déplacer entre une première position de fonctionnement, dans laquelle il est accouplé de manière détachable à ladite pièce de retenue (8) et la maintient dans ladite position de séparation de ladite fourche (7), et une deuxième position de fonctionnement, dans laquelle l'élément de levier (45) est libéré de ladite pièce de retenue (8).

3. Dispositif selon la revendication 2,
**caractérisé en ce que**
ledit élément de levier (45) est situé d'un côté de ladite fourche (7) et est chargé vers ladite première position de manoeuvre pour accoupler ladite pièce de retenue (8), et **en ce que** ladite fourche (7) a une partie d'interaction (33) capable d'exercer une poussée sur ledit élément de levier (45) pour le désaccoupler de ladite pièce de retenue (8) pendant le mouvement de la fourche (7) vers ladite position de fixation.

4. Dispositif selon la revendication 3,
**caractérisé en ce que**
ladite partie d'interaction est formée par une protubérance (33) du bord périphérique de ladite fourche (7).

5. Dispositif selon l'une quelconque des revendications 2 à 4,
**caractérisé en ce que**
ledit élément de levier (45) a une première partie d'extrémité (46) fixée sous la forme d'une articulation audit corps de support (6) et une seconde partie d'extrémité libre (49) qui peut être accouplée de manière détachable à un évidement d'extrémité (50) de ladite pièce de retenue (8).

6. Dispositif selon la revendication 5,
**caractérisé en ce que**
ledit évidement (50) a essentiellement une forme en L.

7. Dispositif selon l'une quelconque des revendications 2 à 6,
**caractérisé en ce que**
ledit élément de levier (45) consiste en un ressort à lames.

8. Dispositif selon la revendication 7,
**caractérisé en ce que**
ladite première partie d'extrémité (46) dudit élément de levier (45) a essentiellement une forme en U, est enroulée autour d'un goujon (47) dudit corps de support (6) et est emprisonnée entre le goujon (47) et une partie de retenue (16) dudit corps de support (6).
